## Europäisches Patentamt

(19) **European Patent Office**

**Office européen des brevets**

(11) Veröffentlichungsnummer: **0 065 242**
**B1**

(12) **EUROPÄISCHE PATENTSCHRIFT**

(45) Veröffentlichungstag der Patentschrift:
28.03.84

(51) Int. Cl.³: **H 04 N 1/028,** H 04 N 1/46

(21) Anmeldenummer: **82103977.3**

(22) Anmeldetag: **07.05.82**

(54) Lichtaufnahme-Vorrichtung.

(30) Priorität: **09.05.81 DE 3118458**

(43) Veröffentlichungstag der Anmeldung:
**24.11.82 Patentblatt 82/47**

(45) Bekanntmachung des Hinweises auf die Patenterteilung:
**28.03.84 Patentblatt 84/13**

(84) Benannte Vertragsstaaten:
**AT BE CH FR GB IT LI NL SE**

(56) Entgegenhaltungen:
**DE - A - 1 900 635**
**DE - A - 2 001 099**
**DE - A - 2 850 701**
**US - A - 1 970 312**
**US - A - 3 566 119**
**US - A - 3 603 730**
**US - A - 4 080 634**

(73) Patentinhaber: **DR.-ING. RUDOLF HELL GmbH,**
**Grenzstrasse 1-5, D-2300 Kiel 14 (DE)**

(72) Erfinder: **Jürgensen, Heinrich, Dütschfeldredder 22,**
**D-2301 Raisdorf (DE)**

ACTORUM AG

Lichtaufnahme-Vorrichtung

Technisches Gebiet

Die Erfindung betrifft eine Lichtaufnahme-Vorrichtung eines optoelektronischen Abtastorgans für Durchsichts- und Aufsichts-Vorlagen bei Flachbett- oder Trommel-Abtasteinrichtungen.

Stand der Technik

Flachbett- oder Trommel-Abtasteinrichtungen finden z.B. in der Faksimile-Übertragungstechnik Anwendung. Ein Lichtstrahl tastet eine zu reproduzierende Vorlage punkt- und zeilenweise ab. Das von der Vorlage kommende Abtastlicht fällt auf ein optoelektronisches Abtastorgan und wird dort in ein Bildsignal umgewandelt. Das Bildsignal wird über einen Übertragungskanal an eine Faksimile-Aufzeichnungseinrichtung übermittelt, in der die Reproduktion der Vorlage aufgezeichnet wird.

Die zu reproduzierenden Vorlagen sind Schrift-Vorlagen, gerasterte oder ungerasterte Bild-Vorlagen oder aus Schrift und Bild montierte Vorlagen, sogenannte Klebemontagen.

Herkömmliche optoelektronische Abtastorgane bestehen im wesentlichen aus mindestens einer Lichtquelle zur punktförmigen Beleuchtung der Vorlage, einem Objektiv, einem optoelektronischen Wandler zur Erzeugung des Bildsignals und aus einer zwischen Objektiv und Wandler angeordneten Blende. Während die Lichtquelle einen relativ grossen Beleuchtungspunkt auf der Vorlage erzeugt, bestimmt die Blenden-Öffnung die Grösse des eigentlichen kleineren Abtastpunktes und mithin die Abtastfeinheit, indem der Abtastpunkt auf der Vorlage mittels des Objektivs scharf in der Blende abgebildet wird. Zur scharfen Abbildung des Abtastpunktes, auch im Falle von Dickeschwankungen der Vorlagen bei Klebemontagen, ungleichmässigem Farbauftrag usw., muss das Objektiv eine grosse Tiefenschärfe aufweisen, da eine Nachstellung der Schärfe während der Abtastung aufwendig ist. Eine grosse Tiefenschärfe wird aber wiederum nur bei einem kleinen Öffnungswinkel des Objektivs erreicht.

Vorlagen reflektieren das Abtastlicht diffus unter einem grossen Raumwinkel. Bei Kratzern in der Vorlage und sogenannten Schattenkanten bei Klebemontagen ist die Intensitätsverteilung des zurückgeworfenen Abtastlichtes innerhalb des Raumwinkels unsymmetrisch, was im Falle einer nahezu punktförmigen Helligkeitsmessung zu Abtastfehlern führt. Um solche Abtastfehler zu verringern, muss das Abtastlicht gesammelt werden, d.h. das Abtastorgan muss das unsymmetrisch zurückgeworfene Abtastlicht unter einem möglichst grossen Raumwinkel aufnehmen, wozu ein grosser Öffnungswinkel des Objektivs erforderlich ist.

Bei einem herkömmlichen Abtastorgan mit Blende und Objektiv stehen somit der Forderung nach einer grossen Tiefenschärfe bei kleinem Öffnungswinkel die Forderung nach einem grossen Öffnungswinkel zur Verringerung der genannten Abtastfehler gegenüber, und es muss hinsichtlich dieser Forderungen ein Kompromiss eingegangen werden, was als erheblicher Nachteil angesehen wird.

Zur Verringerung der genannten Abtastfehler sind aus der US-PS 4 080 634 und der US-PS 3 603 730 Lichtaufnahme-Vorrichtungen in Form von Hohlkörpern bekannt, mit denen das von der Vorlage kommende Abtastlicht gesammelt und lichtempfindlichen Flächen zugeführt wird. Im Falle der US-PS 4 080 634 ist die lichtempfindliche Fläche ein Fotodiodenstreifen, und im Falle der US-PS 3 603 730 ist die gesamte Innenfläche des Hohlkörpers als lichtempfindliche Fläche ausgebildet.

Die bekannten Lichtaufnahme-Vorrichtungen haben den Nachteil, dass derartige lichtempfindliche Flächen (Fotodioden) relativ unempfindlich und langsam sind, wodurch sich nur eine geringe Abtastgeschwindigkeit erreichen lässt. Eine höhere Abtastgeschwindigkeit liesse sich beispielsweise durch die Verwendung schneller Foto-Multiplier erzielen. Die Anordnung einer Vielzahl solcher Foto-Multiplier anstelle der lichtempfindlichen Fläche wäre bei den bekannten Lichtaufnahme-Vorrichtungen zu aufwendig bzw. aus Raumbedarfsgründen kaum möglich. Nachteilig ist weiterhin, dass die bekannten Lichtaufnahme-Vorrichtungen nur zur Abtastung von Aufsichts-Vorlagen bei Flachbett-Abtasteinrichtungen, nicht aber für Durchsichts-Vorlagen und für Trommel-Abtasteinrichtungen geeignet sind.

Offenbarung der Erfindung

Aufgabe der vorliegenden Erfindung ist es daher, zur Vermeidung der genannten Nachteile eine Lichtaufnahme-Vorrichtung für Durchsichts- und/oder Aufsichts-Abtastung insbesondere bei Trommel-Abtasteinrichtungen anzugeben, mit der eine hohe Abtastgeschwindigkeit und gleichzeitig eine hohe Empfindlichkeit und Gleichförmigkeit der Abtastung erreicht wird.

Diese Aufgabe wird durch die im kennzeichnenden Teil des Anspruchs 1 angegebenen Merkmale gelöst.

Vorteilhafte Weiterbildungen sind in den Unteransprüchen angegeben.

Kurze Beschreibung der Zeichnungen

Die Erfindung wird im folgenden anhand der Fig. 1 bis 5 näher erläutert. Es zeigen:

Fig. 1 den prinzipiellen Aufbau einer Trommel-Abtasteinrichtung mit einer Lichtaufnahme-Vorrichtung für Aufsichts-Abtastung,

Fig. 2 eine Lichtaufnahme-Vorrichtung für Aufsichts-Abtastung in einem Schnittbild,

Fig. 3 ein Ausführungsbeispiel einer Lichtaufnahme-Vorrichtung für Durchsichts-Abtastung bei einer Trommel-Abtasteinrichtung,

Fig. 4 eine Lichtaufnahme-Vorrichtung für Farb-Abtastung in einem Ausschnitt, und

Fig. 5 ein Ausführungsbeispiel einer Lichtaufnahme-Vorrichtung für Aufsichts-Abtastung bei einer Flachbett-Abtasteinrichtung.

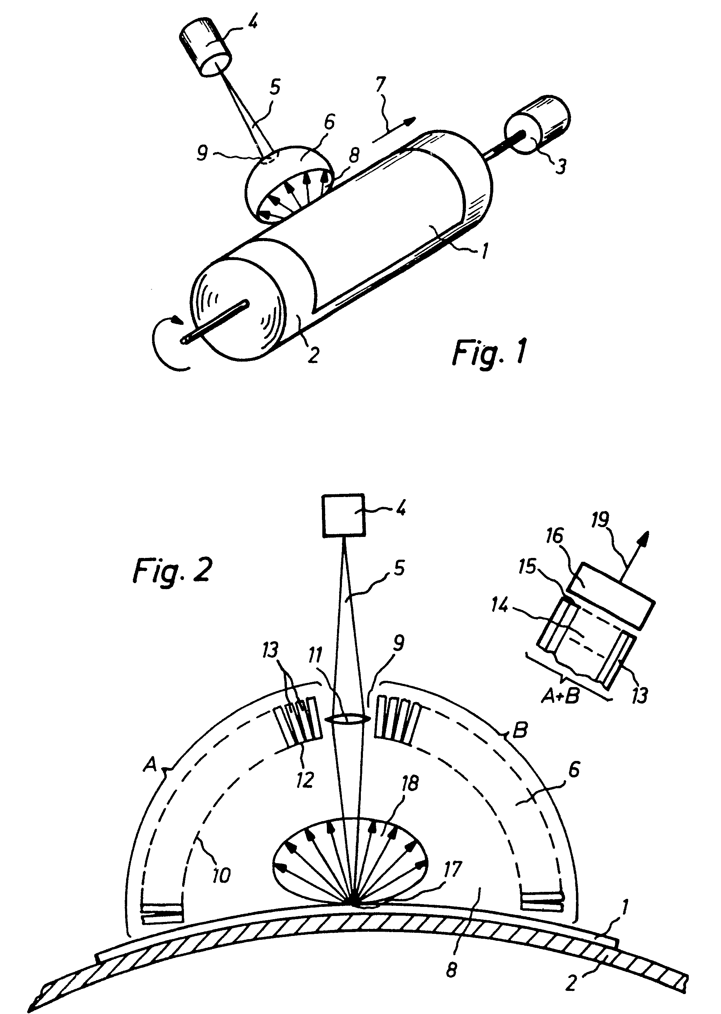

Fig. 1 zeigt den prinzipiellen Aufbau einer Trommel-Abtasteinrichtung mit einer Lichtaufnahme-Vorrichtung für Aufsichts-Abtastung.

Eine zu reproduzierende Aufsichts-Vorlage 1 ist auf einer Abtasttrommel 2 angebracht, die von einem Motor 3 angetrieben wird. Eine Lichtquelle 4, z.B. ein Laserlicht-Generator, zur Erzeugung des abtastenden Lichtbündels 5 und eine Lichtaufnahme-Vorrichtung 6 eines nicht näher dargestellten optoelektronischen Abtastorgans bewegen sich gleichsinnig in Richtung eines Pfeiles 7 axial an der Abtasttrommel 2 entlang. Die Lichtaufnahme-Vorrichtung 6 hat etwa die Form einer halben Hohlkugel, deren Öffnung der Aufsichts-Vorlage 1 zugewandt ist und eine Lichtdurchtritts-Öffnung 8 bildet. Die Lichtaufnahme-Vorrichtung 6 weist auf der von der Aufsichts-Vorlage 1 abgewandten Seite eine kleinere Lichteintritts-Öffnung 9 auf. Die Innenfläche der Lichtaufnahme-Vorrichtung ist als Lichtaufnahmefläche ausgebildet. Das von der Lichtquelle 4 ausgehende abtastende Lichtbündel 5 fällt durch die Lichteintritts-Öffnung 9 und durch die Lichtdurchtritts-Öffnung 8 auf die Aufsichts-Vorlage 1. Das mit dem Bildinhalt der Aufsichts-Vorlage 1 modulierte Abtastlicht wird durch die Lichtdurchtritts-Öffnung 8 in die Lichtaufnahme-Vorrichtung 6 zurückgeworfen, von der Lichtaufnahmefläche aufgenommen und mittels eines in Fig. 1 nicht näher dargestellten optoelektronischen Wandlers in ein Bildsignal umgesetzt.

Fig. 2 zeigt den Aufbau der Lichtaufnahme-Vorrichtung 6 für Aufsichts-Vorlagen mit der Lichteintritts-Öffnung 9 und der Lichtdurchtritts-Öffnung 8 in einem Schnittbild senkrecht zur Achse der Abtasttrommel 2.

In der Lichteintritts-Öffnung 9 ist ein Objektiv 11, vorzugsweise ein Zoom-Objektiv, angeordnet. Die Lichteintritts-Öffnung 9 ist so gross gehalten, dass das von einer glänzenden Vorlagenoberfläche zurückgespiegelte, unmodulierte Abtastlicht direkt aus der Lichtaufnahme-Vorrichtung 6 wieder austritt und unberücksichtigt bleibt. Der Spalt zwischen der rotierenden Oberfläche der Abtasttrommel 2 und der Lichtaufnahme-Vorrichtung 6 ist so breit gewählt, dass insbesondere die dickeren Klebemontagen ungehindert passieren können.

Die Lichtaufnahmefläche 10 besteht aus einer Vielzahl von Teilflächen. Die Teilflächen sind im Ausführungsbeispiel die Endflächen 12 von Lichtleitfasern 13, die in der Figur nicht im Detail und nicht in voller Länge dargestellt werden. Die Lichtleitfasern 13 sind derart angeordnet, dass ihre Endflächen 12 etwa Tangentialflächen der Hohlkugel darstellen. Sämtliche Lichtleitfasern 13, symbolisiert durch «A» und «B», sind zu einem Lichtleitfaser-Bündel 14 (A+B) zusammengefasst, wobei die anderen Endflächen gemeinsam eine Lichtaustrittsfläche 15 für das Abtastlicht bilden. An die Lichtaustrittsfläche 15 ist ein optoelektronischer Wandler 16, z.B. ein schneller Foto-Multiplier, optisch angekoppelt.

Das in der Lichtquelle 4 erzeugte abtastende Lichtbündel 5 wird mittels des Objektivs 11 in einen Abtastpunkt 17 auf der Aufsichts-Vorlage 1 fokussiert, wobei Abtasttrommel 2 und Lichtaufnahme-Vorrichtung 6 derart zueinander positioniert sind, dass der Abtastpunkt 17 Mittelpunkt der Hohlkugel ist. Das mit dem Bildinhalt des momentanen Abtastpunktes 17 modulierte Abtastlicht 18, das aufgrund von Kratzern oder Klebemontagen eine unsymmetrische Intensitätsverteilung haben möge, wird von der Aufsichts-Vorlage 1 diffus in die Lichtaufnahme-Vorrichtung 6 reflektiert. Die Lichtaufnahmefläche 10 der Lichtaufnahme-Vorrichtung 6 sammelt das Abtastlicht 18 unter einem grossen Öffnungswinkel und leitet es zu dem optoelektronischen Wandler 16, welcher das Bildsignal auf einer Leitung 19 erzeugt. Unter Öffnungswinkel wird derjenige Raumwinkel verstanden, unter dem die Lichtaufnahme-Vorrichtung überhaupt Licht aufnehmen kann.

Die erfindungsgemässe Lichtaufnahme-Vorrichtung weist insbesondere folgende Vorteile auf:

Die Lichtaufnahme-Vorrichtung nimmt einen grossen Anteil des von der Vorlage kommenden Abtastlichtes 18 unter einem grossen Öffnungswinkel auf, wodurch ein hoher Wirkungsgrad erzeugt und die störenden Einflüsse von Kratzern und Schattenkanten in vorteilhafter Weise wesentlich verringert werden. Andererseits wird eine grosse Tiefenschärfe in der Abtastebene erreicht, da unabhängig vom Öffnungswinkel ein schmales abtastendes Lichtbündel 5 mittels des Objektivs 11 erzeugt wird. Wegen des hohen Wirkungsgrades kann die Lichtquelle 4 eine geringere Leistung aufweisen. Da an dem Lichttransport zum optoelektronischen Wandler 16 eine Vielzahl von Lichtleitfasern 13 beteiligt sind, werden ungleiche Übertragungseigenschaften der einzelnen Lichtleitfasern 13 in vorteilhafter Weise eliminiert und eine hohe Gleichförmigkeit der Abtastung erzielt. Da die Grösse des Abtastpunktes 17 nicht durch die Öffnung einer Blende, sondern durch die entsprechende Fokussierung des Lichtbündels 5 festgelegt wird, tritt kein Lichtverlust durch eine Blende ein, und die Lichtquelle 4 kann effektiver genutzt werden.

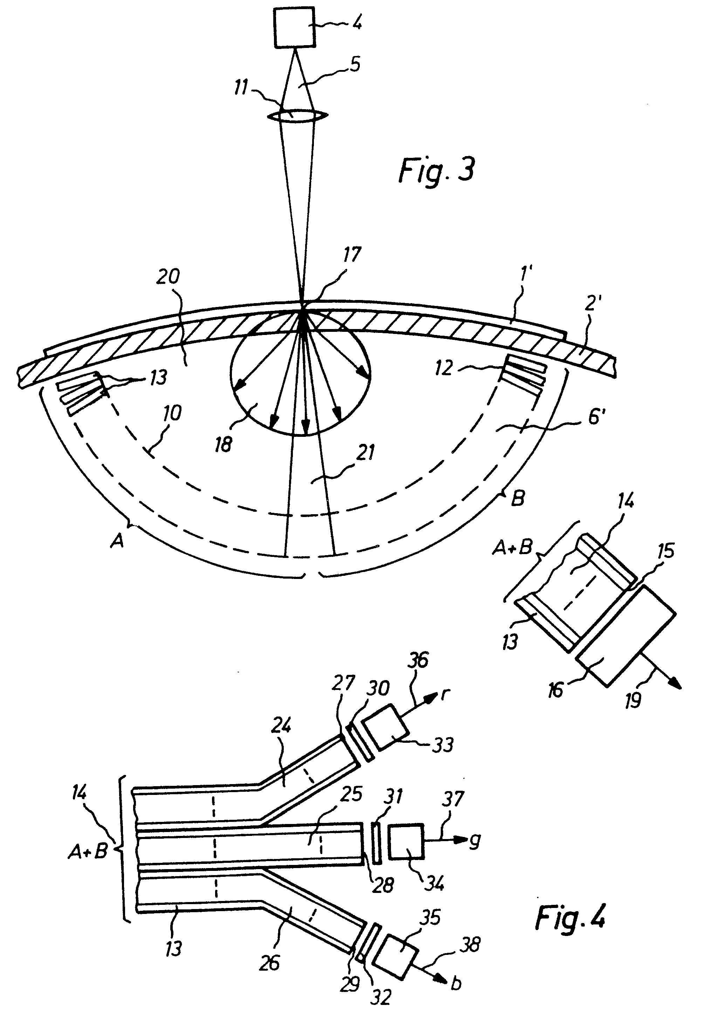

Fig. 3 zeigt ein weiteres Ausführungsbeispiel einer Lichtaufnahme-Vorrichtung für Durchsichts-Abtastung bei einer Trommel-Abtasteinrichtung in einem Schnittbild.

Auf der transparent ausgeführten Abtasttrommel 2' befindet sich eine Durchsichts-Vorlage 1'. Innerhalb der Abtasttrommel 2' ist eine modifizierte Lichtaufnahme-Vorrichtung 6' angeordnet, welche lediglich auf der der Durchsichts-Vorlage 1' zugewandten Seite eine Lichteintritts-Öffnung 20 aufweist. Das abtastende Lichtbündel 5 trifft auf die Durchsichts-Vorlage 1' und wird dort mit dem Bildinhalt des Abtastpunktes 17 moduliert. Das Abtastlicht-Bündel 21 fällt durch transparente Abtasttrommel 2' und die Lichteintritts-Öffnung 20 in die Lichtaufnahme-Vorrichtung 6'. Das Abtastlicht-Bündel 21 wird wiederum durch die Lichtleitfasern 13 zu dem optoelektronischen Wandler 16 transportiert und dort in ein Bildsignal umgesetzt.

Die Lichteintritts-Öffnung 20 kann mit einer Glasplatte, einer Streuscheibe oder mit einer Kombination aus Glasplatte und Streuscheibe bzw. Zerstreuungslinse in der optischen Achse des abtastenden Lichtbündels 5 abgedeckt sein, um den Innenraum vor Staubeinfall zu schützen. Streuscheibe oder Zerstreuungslinse haben insbesondere den zusätzlichen Vorteil, dass gleichzeitig das Abtastlicht-Bündel 21 aufgeweitet wird. Dadurch wird einerseits eine grössere Anzahl von Lichtleitfasern 13 am Transport des Abtastlichtes zum optoelektronischen Wandler 16 beteiligt und eine grössere Gleichmässigkeit der Abtastung erreicht und andererseits die Lichtaufnahme-Vorrichtung 6' gegenüber im Innenraum befindlichen Staubpartikeln unempfindlicher.

Bei Trommel-Abtasteinrichtungen für wahlweise Aufsichts- und Durchsichts-Abtastung kann vorzugsweise die Lichtaufnahme-Vorrichtung 6 und 6' verschwenkbar ausgeführt sein, so dass sich die Lichtaufnahme-Vorrichtung je nach Vorlagenart gemäss den Fig. 2 und 3 überhalb oder innerhalb der Abtasttrommel 2 bzw. 2' befindet, wobei die Lichteintritts-Öffnung 9 nach Fig. 2 im Falle einer Durchsichts-Abtastung durch geeignete Mittel verschliessbar gestaltet ist.

Alternativ können solche Abtasteinrichtungen auch mit jeweils einer Lichtaufnahme-Vorrichtung für Aufsichts-Abtastung und einer für Durchsichts-Abtastung ausgerüstet sein, die je nach Vorlagenart aktiviert werden. Das Vorhandensein zweier Lichtaufnahme-Vorrichtungen hat bei Durchsichts-Abtastung insbesondere den Vorteil, dass beide Lichtaufnahme-Vorrichtungen zwecks Eliminierung von Bildsignalstörungen aufgrund von Staubpartikeln, Kratzern usw. optisch oder elektrisch parallelgeschaltet werden können, wobei im Falle einer optischen Parallelschaltung die Lichtaustrittsflächen von beiden Lichtaufnahme-Vorrichtungen an einen optoelektronischen Wandler angekoppelt werden, während im Falle einer elektrischen Parallelschaltung die Ausgänge der optoelektronischen Wandler zusammengefasst sind.

Eine vorteilhafte Ausgestaltung der erfindungsgemässen Lichtaufnahme-Vorrichtungen bei Abtasteinrichtungen für farbige Vorlagen ist in Fig. 4 in einem Ausschnitt dargestellt.

Eine vorteilhafte Ausgestaltung der erfindungsgemässen Lichtaufnahme-Vorrichtungen bei Abtasteinrichtungen für farbige Vorlagen ist in Fig. 4 in einem Ausschnit dargestellt.

Das an die optoelektronischen Wandler 16 geführte Lichtleitfaser-Bündel 14 wird in mindestens drei Einzelbündel 24, 25 und 26 aufgespalten, wobei die Lichtleitfaser-Endflächen eines Einzelbündels jeweils eine separate Lichtaustrittsfläche 27, 28 und 29 bilden. Die Aufteilung des Lichtleitfaser-Bündels 14 erfolgt in der Weise, dass jeweils ein Tripel von Lichtleitfasern 13, deren Endflächen 12 in der Lichtaufnahmefläche 10 dicht beieinanderliegen, ausgewählt und jede Lichtleitfaser 13 eines Tripels einem Einzelbündel 24, 25 und 26 zugeordnet wird.

Die drei Lichtaustrittsflächen 27, 28 und 29 sind zum Zwecke der Farbtrennung des Abtastlichtes über drei dichroitische Filter 30, 31 und 32 an drei optoelektronische Wandler 33, 34 und 35 angekoppelt, welche die drei Farbmesswertsignale r, g und b auf den Leitungen 36, 37 und 38 liefern.

Bisher war von einer Lichtaufnahme-Vorrichtung für Trommel-Abtasteinrichtungen die Rede. Die erfindungsgemässe Lichtaufnahme-Vorrichtung lässt sich aber auch bei Flachbett-Abtasteinrichtungen verwenden.

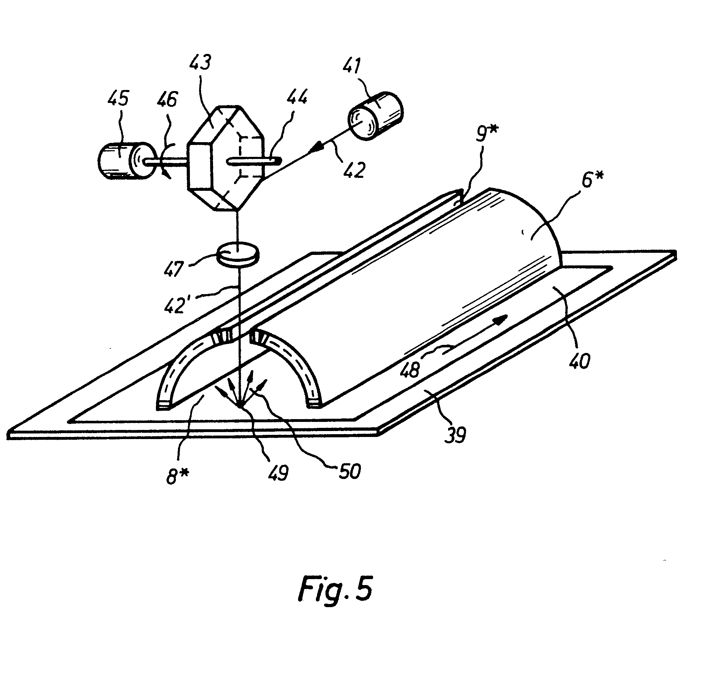

Fig. 5 zeigt ein Ausführungsbeispiel einer solchen Lichtaufnahme-Vorrichtung für Aufsichts-Abtastung bei einer Flachbett-Abtasteinrichtung. In diesem Falle ist die Lichtaufnahme-Vorrichtung als halber Hohlzylinder mit dem Querschnitt nach Fig. 2 ausgebildet.

Auf einem beweglichen Flachbett-Vorlagenträger 39 befindet sich die zu reproduzierende Aufsichts-Vorlage 40. Eine Lichtquelle 41, z.B. wiederum ein Laserlicht-Generator, erzeugt einen Lichtstrahl 42, der auf einen Vielflächen-Drehspiegel 43 fällt. Die Drehachse 44 des Vielflächen-Drehspiegels 43 ist senkrecht zur optischen Achse des Lichtstrahls 42 ausgerichtet. Ein Motor 45 treibt den Vielflächen-Drehspiegel 43 mit konstanter Winkelgeschwindigkeit in Richtung eines Pfeiles 46 an. Durch die Rotation des Vielflächen-Drehspiegels 43 wird der von der Lichtquelle 41 ausgehende Lichtstrahl 42 von den einzelnen Spiegelflächen reflektiert und durch ein Objektiv 47 laufend in Zeilenrichtung 48 (Abtastrichtung) über die Aufsichts-Vorlage 40 ausgelenkt. Gleichzeitig führt der Flachbett-Vorlagenträger 39 eine schrittweise oder kontinuierliche Vorschubbewegung senkrecht zur Zeilenrichtung 48 aus, wodurch die Aufsichts-Vorlage 40 punktweise in nebeneinanderliegenden Zeilen abgetastet wird.

Über dem beweglichen Flachbett-Vorlagenträger 39 ist die ortsfeste Lichtaufnahme-Vorrichtung 6* angeordnet, die sich in Zeilenrichtung 48 mindestens über die Länge des Flachbett-Vorlagenträgers 39 erstreckt. Die Lichteintritts-Öffnung 9* ist schlitzförmig ausgeführt, und die Lichtdurchtritts-Öffnung 8* wird von der offenen Seite des halben Hohlzylinders gebildet.

Der mittels des Vielflächen-Drehspiegels 43 abgelenkte Lichtstrahl 42' fällt durch die schlitzförmige Lichteintritts-Öffnung 9* und die Lichtdurchtritts-Öffnung 8* auf die Aufsichts-Vorlage 40 und wird dort mit dem Bildinhalt des Abtastpunktes 49 moduliert. Das modulierte Abtastlicht 50 wird von der Aufsichts-Vorlage 40 reflektiert, von der Lichtaufnahme-Vorrichtung 6* gesammelt und, wie bereits beschrieben, weiter verarbeitet.

Die zuvor beschriebene Lichtaufnahme-Vorrichtung für Flachbett-Abtasteinrichtungen kann selbstverständlich auch in modifizierter Form, wie im Falle einer Trommel-Abtasteinrichtung erläutert, für Durchsichts-Abtastung verwendet werden.

In einer Ausgestaltung der Lichtaufnahme-Vorrichtung für Flachbett-Abtasteinrichtungen kann das Lichtleitfaser-Bündel 14 nach Fig. 2 in der Weise geordnet werden, dass die Lichtleitfasern 13 (A), deren Endflächen 12 links der optischen Achse des Lichtbündels 5 liegen und die Lichtleitfasern 13 (B), deren Endflächen 12 rechts der optischen Achse liegen, jeweils zu einem Einzelbündel zusammengefasst werden, wobei die Lichtleiter-Endflächen jedes Einzelbündels eine separate Lichtaustrittsfläche bilden.

Die separaten Lichtaustrittsflächen können dann optisch parallelgeschaltet, d.h. gemeinsam an einen optoelektronischen Wandler angekoppelt werden. Alternativ kann aber auch jeder Lichtaustrittsfläche in eigener optoelektronischer Wandler zugeordnet werden. Mit beiden Ausführungsformen können in vorteilhafter Weise Bildsignalstörungen aufgrund von Staubpartikeln oder Kratzern in der Vorlage eliminiert werden.

**Patentansprüche**

1. Lichtaufnahme-Vorrichtung für die punkt- und zeilenweise optisch-elektrische Abtastung von Durchsichts-Vorlagen (1′) mittels eines Lichtstrahls (5), bestehend aus einem Hohlkörper (6′) mit einer der Vorlage zugewandten Lichteintritts-Öffnung (20) für das durch die Vorlage hindurchkommende Abtastlicht und mit einer als Lichtaufnahmefläche ausgebildeten Innenfläche (10), welche das Abtastlicht unter einem grossen Raumwinkel aufnimmt, dadurch gekennzeichnet, dass
a) die Lichtaufnahmefläche (10) von den einen Endflächen (12) einer Vielzahl von Lichtleitfasern (13) gebildet wird, wobei die Flächennormalen dieser Endflächen (12) in Richtung des ankommenden Abtastlichtes (18) ausgerichtet sind, und
b) die anderen Endflächen (15) der Lichtleitfasern (13) an mindestens einen optoelektronischen Wandler (16) zur Umwandlung des Abtastlichtes in Bildsignale angekoppelt sind.

2. Lichtaufnahme-Vorrichtung für die punkt- und zeilenweise optisch-elektrische Abtastung von Aufsichts-Vorlagen (1) mittels eines Lichtstrahls (5), bestehend aus einem Hohlkörper (6) mit einer Lichteintritts-Öffnung (9) auf der von der Vorlage abgewandten Seite für den abtastenden Lichtstrahl, mit einer der Vorlage zugewandten Lichtdurchtritts-Öffnung (8) für den abtastenden Lichtstrahl und das von der Vorlage reflektierte Abtastlicht und mit einer als Lichtaufnahmefläche ausgebildeten Innenfläche (10), welche das Abtastlicht unter einem grossen Raumwinkel aufnimmt, dadurch gekennzeichnet, dass

a) die Lichtaufnahmefläche (10) von den einen Endflächen (12) einer Vielzahl von Lichtleitfasern (13) gebildet wird, wobei die Flächennormalen dieser Endflächen (12) in Richtung des ankommenden Abtastlichtes (18) ausgerichtet sind, und

b) die anderen Endflächen (15) der Lichtleitfasern (13) an mindestens einen optoelektronischen Wandler (16) zur Umwandlung des Abtastlichtes in Bildsignale angekoppelt sind.

3. Lichtaufnahme-Vorrichtung nach Anspruch 1 oder 2, dadurch gekennzeichnet, dass der Querschnitt der Lichtaufnahmefläche (10) des Hohlkörpers senkrecht zur Vorlage Teil eines Kreises ist, dessen Mittelpunkt etwa im Auftreffpunkt (17) des abtastenden Lichtstrahls (5) auf der Vorlage (1; 1′) liegt, wobei die Teilflächen (12) Tangentialflächen sind.

4. Lichtaufnahme-Vorrichtung nach einem der Ansprüche 1–3, dadurch gekennzeichnet, dass die Lichtaufnahmefläche (10) des Hohlkörpers zur Abtastung von auf trommelförmigen Trägern (2; 2′) angeordneten Vorlagen (1; 1′) – Trommelabtastung – Teil der Innenfläche einer Hohlkugel ist.

5. Lichtaufnahme-Vorrichtung nach einem der Ansprüche 1 bis 3, dadurch gekennzeichnet, dass die Lichtaufnahmefläche (10) des Hohlkörpers zur Abtastung von auf ebenen Trägern (31) angeordneten Vorlagen (40) – Flachbettabtastung – Teil der Innenfläche eines Hohlzylinders ist, der sich mindestens über die Zeilenlänge (48) ausdehnt, wobei sich die Öffnungen (8*; 9*) ebenfalls mindestens über die Zeilenlänge (48) erstrecken.

6. Lichtaufnahme-Vorrichtung nach Anspruch 2, dadurch gekennzeichnet, dass die Lichteintritts-Öffnung (9) so gross gewählt ist, dass das durch Spiegelreflektion von der Vorlage (1) erzeugte Abtastlicht (18) durch die Lichteintritts-Öffnung (9) wieder aus dem Hohlkörper (6) austritt.

7. Lichtaufnahme-Vorrichtung nach Anspruch 1, dadurch gekennzeichnet, dass die Lichteintritts-Öffnung (20) mit einer Glasplatte verschlossen ist.

8. Lichtaufnahme-Vorrichtung nach Anspruch 1, dadurch gekennzeichnet, dass die Lichteintritts-Öffnung (20) mit einem streuenden Medium verschlossen ist.

9. Lichtaufnahme-Vorrichtung nach Anspruch 2, dadurch gekennzeichnet, dass die Lichteintritts-Öffnung (9) zur Abtastung von Durchsichts-Vorlagen (1′) verschliessbar ist.

10. Lichtaufnahme-Vorrichtung zur Abtastung von farbigen Vorlagen nach einem der Ansprüche 1–9, dadurch gekennzeichnet, dass zwischen den Endflächen (15) der Lichtleitfasern (13) und den optoelektronischen Wandlern (33; 34; 35) mindestens drei dichroitische Filter (30; 31; 32) zur Farbtrennung angeordnet sind.

**Claims**

1. Light pick-up device for dot-by-dot and line-by-line scanning by opto-electric means of transparent originals (1′) by means of a light beam (5), comprising a hollow body (6′) having a light-admitting aperture (20) facing towards the original for the scanning light arriving through the original and an internal surface (10) arranged to operate as a light pick-up surface, which receives the scanning light under a large spatial angle, characterized in that

a) the light pick-up surface (10) is formed by the one end faces (12) of a plurality of optical fibres (13), the lines at right angles to these end faces (12) being aligned in the direction of the incoming scanning light (18), and
b) the other end faces (15) of the optical fibres (13) are coupled to at least one opto-electronic transducer (16) for conversion of the scanning light into image signals.

2. Light pick-up device for dot-by-dot and line-by-line opto-electric scanning of opaque originals (1) by means of a light beam (5), comprising a hollow body (6) having a light-admitting aperture (9) at the side facing away from the original for the scanning light beam, with a light passage aperture (8) facing towards the original for the scanning light beam and the scanning light reflected from the original, and having an internal surface (10) arranged to operate as a light pick-up surface (10) which receives the scanning light under a large spatial angle, characterized in that

a) the light pick-up surface (10) is formed by the one end faces (12) of a plurality of optical fibres (13), the lines at right angles to these end faces (12) being aligned in the direction of the incoming scanning light (18), and
b) the other end faces (15) of the optical fibres (13) are coupled to at least one opto-electronic transducer (16) for conversion of the scanning light into image signals.

3. Light pick-up device according to claim 1 or 2, characterized in that the cross-section of the light pick-up surface (10) of the hollow body at right angles to the original is part of a circle the centre of which lies approximately in the point of impingement (17) of the scanning light beam (5) on the original (1; 1'), the end surfaces (12) being tangential surfaces.

4. Light pick-up device according to one of the claims 1 to 3, characterized in that the light pick-up surface (10) of the hollow body for the scanning of originals (1; 1') placed on drum-shaped carriers (2; 2') – drum scanning – are part of the internal surface of a hollow sphere.

5. Light pick-up device according to one of the claims 1 to 3, characterized in that the light pick-up surface (10) of the hollow body for the scanning of originals (40) arranged on plane carriers (31) – flat-bed scanning – is part of the internal surface of a hollow cylinder which extends at least over the line length (48), the apertures (8*; 9*) also extending at least over the line length (48).

6. Light pick-up device according to claim 2, characterized in that the light-admitting aperture (9) is selected to be so large that the scanning light (18) produced by mirror-reflection off the original (1) leaves the hollow body (6) again through the light admitting aperture (9).

7. Light pick-up device according to claim 1, characterized in that the light-admitting aperture (20) is closed off by a glass plate.

8. Light pick-up device according to claim 1, characterized in that the light-admitting aperture (20) is closed off by means of a dispersion means.

9. Light pick-up device according to claim 2, characterized in that the light-admitting aperture (9) may be closed for the scanning of transparent originals (1').

10. Light pick-up device for the scanning of coloured originals, according to one of the claims 1 to 9, characterized in that at least three dichroic filters (30; 31; 32) are provided between the end faces (15) of the optical fibres (13) and the opto-electronic transducers (33; 34; 35), for colour separation purposes.

**Revendications**

1. Dispositif de réception de lumière pour la détection opto-électrique ponctuelle et ligne par ligne de modèles transparents imprimés à l'aide d'un faisceau de lumière (5), composé d'un corps creux (6') avec une ouverture d'entrée de lumière (20) tournée vers le modèle pour la lumière de détection ayant traversé le modèle et une surface intérieure (10) réalisée en forme de surface de réception de lumière qui reçoit la lumière de détection sous un angle solide important, caractérisé en ce que:

a) la surface de réception de lumière (10) est formée par les surfaces d'extrémité (12) d'un grand nombre de fibres optiques (13), les normales à ces surfaces d'extrémité (12) étant alignées en direction de la lumière de détection de retour (18), et,
b) les autres surfaces d'extrémité (15) des fibres optiques (13) sont couplées sur au moins un convertisseur opto-électronique (16) pour la conversion de la lumière de détection en des signaux-image.

2. Dispositif de réception de lumière pour la détection opto-électrique ponctuelle et ligne par ligne de modèles à réflexion (1) à l'aide d'un faisceau de lumière (5), comprenant un corps creux (6) avec un orifice d'entrée de lumière (9) du côté opposé aux modèles pour le faisceau de lumière de détection, avec un orifice de passage de lumière (8) tourné vers le modèle pour le faisceau de lumière de détection, et la lumière de détection réfléchie par le modèle, ainsi qu'une surface intérieure (10) réalisée en forme de surface de réception de lumière, qui reçoit la lumière de détection suivant un angle solide important, caractérisé en ce que:

a) la surface de réception de lumière (10) est formée par l'une des surfaces d'extrémité (12) d'un grand nombre de fibres optiques (13), les normales à ces surfaces d'extrémité (12) étant alignées en direction de la lumière de détection (18) de retour et,

b) les autres surfaces d'extrémité (15) des fibres optiques (13) sont couplées sur au moins un convertisseur opto-électronique (16) pour la conversion de la lumière de détection en des signaux-image.

3. Dispositif de réception de lumière selon la revendication 1 ou 2, caractérisé en ce que la section de la surface de réception de lumière (10) du corps creux perpendiculairement au modèle est une partie d'un cercle dont le centre se trouve sensiblement au point de rencontre (17) du faisceau de lumière de détection (5) et du modèle (1, 1'), les surfaces élémentaires (12) étant des surfaces tangentes.

4. Dispositif de réception de lumière selon l'une des revendications 1 à 3, caractérisé en ce que la surface de réception de lumière (10) du corps creux est une partie de la surface intérieure d'une sphère creuse pour la détection de modèles (1, 1') fixés sur des supports (2, 2') en forme de tambours (détection sur tambours).

5. Dispositif de réception de lumière selon l'une des revendications 1 à 3, caractérisé en ce que la surface de réception de lumière (10) du corps creux pour la détection de modèles (40) prévus sur des supports plans (31) (détection sur table plane) est une partie de la surface intérieure d'un cylindre creux qui s'étend au moins sur la longueur des lignes (48) et les ouvertures (8*, 9*) s'étendent également sur au moins la longueur des lignes (48).

6. Dispositif de réception de lumière selon la revendication 2, caractérisé en ce que l'orifice d'entrée de lumière (9) est dimensionné de façon telle que la lumière de détection (18) obtenue par la réflexion par miroir sur le modèle (1) sorte de nouveau du corps creux (8) à travers l'orifice d'entrée de lumière (9).

7. Dispositif de réception de lumière selon la revendication 1, caractérisé en ce que l'orifice d'entrée de lumière (20) est fermé par une plaque de verre.

8. Dispositif de réception de lumière selon la revendication 1, caractérisé en ce que l'orifice d'entrée de lumière (20) est fermé par un milieu dispersant.

9. Dispositif de réception de lumière selon la revendication 2, caractérisé en ce que l'orifice d'entrée de lumière (9) peut être fermé pour la détection de modèles par transparence (9').

10. Dispositif de réception de lumière pour la détection de modèles en couleur selon l'une des revendications 1 à 9, caractérisé en ce qu'entre les surfaces d'extrémité (15) des fibres optiques (13) et les convertisseurs opto-électroniques (33, 34, 35), il y a au moins trois fibres dichroïques (30, 31, 32) pour la séparation des couleurs.

0 065 242

*Fig. 1*

*Fig. 2*

9

Fig. 3

Fig. 4

*Fig. 5*